# EUROPEAN PATENT APPLICATION

(11) **EP 3 588 406 A1**
(43) Date of publication of application: **01.01.2020**
(21) Application number: 19181440.9
(22) Date of filing: 20.06.2019
(51) Int. Cl.: G06Q 10/08, G06Q 10/04, G06Q 30/02

(54) **SYSTEM AND METHOD RELATED TO PART PRICING AND PROCUREMENT**

(30) Priority: 22.06.2018 US 201816015909
(71) Applicant: General Electric Company, Schenectady, NY 12345 (US)
(72) Inventor: Poomari, Radhakrishnan, 560066 Bangalore (IN)
(74) Representative: Serjeants LLP

(57) **Abstract**

A computer-implemented method for enabling a user to operate a predictive model for calculating a target price relating to a purchase of a selected part. The method may include the steps of: determining a part family (110), wherein the part family includes a plurality of parts having a common characteristic; for each of the plurality of parts within the part family, obtaining cost data (120); for each of the plurality of parts within the part family, obtaining feature data (125); performing a correlation analysis (140) between the feature data and the cost data for the parts within the part family; developing the predictive model (150) from a result of the correlation analysis; and calculating the target price (160) for the selected part using the predictive model.

## Description

### BACKGROUND OF THE INVENTION

The subject matter disclosed herein relates to part procurement, and more specifically, to systems and methods for pricing parts and the procurement of such parts.

As a necessary and regular course of business, many types of companies, including industrial service and manufacturing companies, procure from outside venders hundreds of thousands of non-capital components or parts, such as, for example, screws, bolts, nuts, fittings, seals, gaskets, technical components, etc., which are then used to manufacture products or fulfill contractual service agreements with other industrial customers. Because of the enormous number of parts required by such companies, backlogs in procurement are a regularly occurrence, which can lead to the delinquent fulfilment of orders or services as well as missed business opportunities and other costs. Further, when combined with the inherent uncertainty within a changing marketplace, the sheer volume of needed parts means that many will be procured at sub-optimal prices, which can significantly erode companies' profit margin. Such issues-e.g., procurement backlogs and payment of sub-optimal prices-stem not only from companies' inability to keep pace and understand a dynamic market, but also from companies' failure to appreciate the intelligence that may be gleamed from their own prior procurement transactions and the lag that is failure has on ongoing vendor selection and price negotiations.

As a result, systems and methods for automating aspects of the procurement process would be useful. More specifically, systems and methods for calculating optimal pricing levels for the procurement of such parts, which then could be used toward making the procurement process more efficient, would have utility in the marketplace.

### BRIEF DESCRIPTION OF THE INVENTION

The present invention provides a computer-implemented method for enabling a user to operate a predictive model for calculating a target price relating to a purchase of a selected part. The method may include the steps of: determining a part family, wherein the part family includes a plurality of parts having a common characteristic; for each of the plurality of parts within the part family, obtaining cost data; for each of the plurality of parts within the part family, obtaining feature data; performing a correlation analysis between the feature data and the cost data for the parts within the part family; developing the predictive model from a result of the correlation analysis; and calculating the target price for the selected part using the predictive model.

The step of developing the predictive model may comprise fitting a model to a correlation between the feature data and the cost data for the parts within the part family.

The feature data may comprise data describing a material from which each of the parts of the part family are made.

The feature data may comprise dimensional specifications, and the step of performing the correlation analysis may comprise correlating at least one of the dimensional specifications to the cost data.

The step of determining the part family may comprise clustering the plurality of parts from a larger pool of candidate parts based on the common characteristic, and the cost data may comprise purchase order prices from previous purchase orders for each of the parts of the part family.

The plurality of parts within the part family may include the selected part. The common characteristic may comprise at least one of a part name and a part number. The step of obtaining dimensional specifications may comprise extracting data from an engineering specification document for each of the parts of the part family.

The dimensional specifications may comprise a unified dimensional attribute, and the at least one of the dimensional specifications included within the correlation analysis may comprise the unified dimensional attribute.

The unified dimensional attribute may be derived from at least two of the dimensional specifications, and the unified dimensional attribute may comprise a surface area for each of the parts in the part family.

The dimensional specifications may comprise a length, a width, and a thickness for each of the parts in the part family, and the unified dimensional attribute may comprise a volume for each of the parts in the part family derived from the length, width, and thickness.

The computer-implemented method may further comprise the step of receiving an input for a value of the at least one of the dimensional specifications for the selected part, wherein the predictive model calculates the target price based on the inputted value of the at least one of the dimensional specifications.

The predictive model may comprise a linear regression model, and the step of performing the correlation analysis between the at least one of the dimensional specifications and the cost data may comprise determining if a degree of correlation between the at least one of the dimensional specifications and the cost data exceeds a threshold degree of correlation.

The predictive model may comprise a multivariate weighted linear regression model, and the step of performing the correlation analysis between the at least one of the dimensional specifications and the cost data may comprise determining if a degree of correlation between the at least one of the dimensional specifications and the cost data exceeds a threshold degree of correlation.

The computer-implemented method may further comprise the steps of receiving at least one command from the user for initiating the calculating of the target price for the selected part, and automatically generating without further human intervention a graphical output on a computer screen of the user that communicates the target price.

The computer-implemented method may further comprise the steps of receiving at least one command from the user for initiating the calculating of the target price for the selected part, and automatically generating without further human intervention a purchase order for the purchase of the selected part, wherein the purchase order comprises a price based upon the calculated target price.

The computer-implemented method may further comprise the step of automatically communicating without further human intervention the generated purchase order to at least one vendor via a form of electronic communication.

The feature data may comprise data of a first characteristic and data of a second characteristic for each of the parts within the parts family. The step of performing the correlation analysis between the feature data and the cost data for the parts within the part family may comprise a first correlation analysis between the data of the first characteristic and the cost data for the parts within the parts family, and a second correlation analysis between the data of the second characteristic and the cost data for the parts within the parts family. The predictive model may comprise a plane regression model.

The first characteristic may comprise a dimensional specification, and the second characteristic may comprise a purchase quantity.

The present invention further provides a system for enabling a user to operate a predictive model for calculating a target price relating to a purchase of a selected part, the system comprising: one or more hardware processor; and a machine-readable storage medium on which is stored instructions that cause the one or more hardware processors to execute a process, wherein the process includes the steps of: determining a part family, wherein the part family comprises a plurality of parts having a common characteristic; for each of the plurality of parts within the part family, obtaining cost data; for each of the plurality of parts within the part family, obtaining feature data; performing a correlation analysis between the feature data and the cost data for the parts within the part family; developing the predictive model from a result of the correlation analysis; and calculating the target price for the selected part using the predictive model.

The step of determining the part family may comprise clustering the plurality of parts from a larger pool of candidate parts based on the common characteristic. The cost data may comprise purchase order prices from previous purchase orders for each of the parts of the part family. The common characteristic may comprise at least one of a part name and a part number. The at least one of the dimensional specifications included within the correlation analysis may comprise a unified dimensional attribute that is derived from at least two of the dimensional specifications.

The dimensional specifications may comprise a length, a width, and a thickness for each of the parts in the part family, and the unified dimensional attribute may comprise a volume for each of the parts in the part family derived from the length, width, and thickness. The system may comprise a graphical user interface. The process may include the step of generating a graphical output on the graphical user interface that communicates the target price.

The present invention further provides a system for enabling a user to operate a predictive model for calculating a target price relating to a purchase of a selected part, the system comprising: one or more hardware processor; and a machine-readable storage medium on which is stored instructions that cause the one or more hardware processors to execute the computer-implemented method described above.

### BRIEF DESCRIPTION OF THE DRAWINGS

These and other features of this invention will be more completely understood and appreciated by careful study of the following more detailed description of exemplary embodiments of the invention taken in conjunction with the accompanying drawings, in which:
Figure 1 is a flowchart illustrating an exemplary method in accordance with embodiments of the present disclosure;
Figure 2 is a flow diagram illustrating the grouping of a part family according to embodiments of the present disclosure;
Figure 3 is an example spreadsheet showing a part family with dimensional specifications and a unified dimensional attribute in accordance with the present disclosure;
Figure 4 provides example linear regression plots in accordance with the present disclosure;
Figure 5 provides an example plane regression plot in accordance with the present disclosure; and
Figure 6 depicts a schematic diagram illustrating an exemplary computer system for performing any one or more of the methods or systems discussed herein.

### DETAILED DESCRIPTION OF THE INVENTION

Example embodiments will be described more fully hereinafter with reference to the accompanying drawings, in which some, but not all embodiments are shown. Indeed, embodiments of the present disclosure may take many different forms and should not be construed as limited to the embodiments set forth herein. Like numbers may refer to like elements throughout.

The present disclosure is directed toward the efficient procurement of non-capital components or parts based on dimensional specifications or features and historical procurement cost data (also "cost data"). More specifically, the present disclosure includes systems and methods for statistically relating cost data to dimensional specifications for a family of parts (also "part family"), for example, a relationship wherein cost data linearly varies with respect to a dimensional specification of the part family. Such dimensional specifications, for example, may include length, width, thickness, diameter, volume, surface area, etc. While reference herein primarily involves the relationship between dimensional specifications and cost data, it should be appreciated that other features of the parts within the part family may be analyzed for a relationship to cost data and used in the predictive model. As will be seen, depending on the correlation that is found to exist between the dimensional specifications and cost data for the part family, a predictive computer model (also "predictive model") can be generated for calculating the target price for a particular part within the part family. In an exemplary embodiment, the generated predictive model may be a linear regression model. Once generated, the linear regression model then can be used to predict or calculate the target price. As used herein, the target price represents an optimal, expected, or fair market price for the particular part, i.e., a price that would be expected given evidence of prior purchases and current market data. As will also be seen, depending upon the characteristics of the cost data and the dimensional specification data for a given part, several variants of linear regression models can be applied. Alternatively, if no correlation between the dimensional specification data and the cost data is found, a meta-heuristics algorithm based on differential cost may be generated to calculate the target price for the particular part. Further, according to exemplary embodiments, a model selection engine can automatically choose the correct type of model to be applied to the dimensional specification and the cost data for calculating the target price for the part.

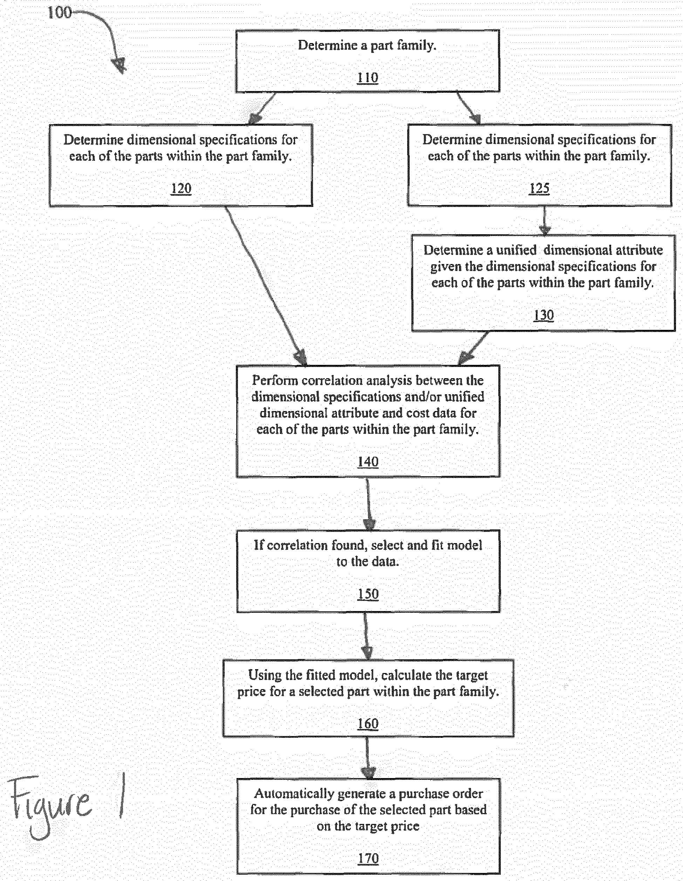

With reference now to Figure 1, block diagram 100 is shown in accordance with a method of the present disclosure. At the first block, block 110, a part family is determined. For example, as explained more below, the part family is a group of parts that all have a similar or common characteristic. The part family, thus, is derived via clustering or grouping together of parts based on this similar or common characteristic. According to exemplary embodiments, for example, the common characteristic of the part family may be based on the part name, description, number, dimensional specification, features, and/or drawings. The part family also may be stored within a database and then received from that database upon issuing a proper request. As used herein, "parts" may refer to technical non-capital components, as may be used in machinery, equipment and other products. For example, parts may include bolts, screws, nuts, washers, fittings, seals, gaskets, gears, and other technical and mechanical components. Such parts, as used herein, may include specialized or non-specialized hardware pieces and other components, which, typically, are repeatedly purchased in large quantities by companies over the course of a business cycle. The grouping of part families may be initiated via reference to parts lists and other records that are generally maintained by companies during the development and manufacture of products.

Upon determining the part family, at block 120, cost data for each of the parts within the part family is determined. For example, such cost data may be stored within a database and received therefrom upon a response to a properly executed request. According to other embodiments, such cost data is derived from data related to previous purchases or purchase orders for past purchases of the parts within the part family, as may be maintained by a company as a normal course of record keeping.

After the part family is determined, at block 125, data related to part features (also, "feature data") may be obtained for each of the parts within the part family. As indicated in Figure 1, such feature data may include dimensional specifications, but also may include other features, such as material the part is made from, for the parts within the part family, as discuss more below. As will be appreciated, such data may be obtained in various ways. For example, dimensional specifications may be stored within a database and received from that database upon issuing a request. According to other embodiments, such dimensional specifications may be extracted from one or more sources, including engineering specification documents and drawings. This may include image extractions, column snipping, and/or attribute extraction from one or more of these sources.

According to preferred embodiments of the present invention, the dimensional specifications may also include a unified dimensional attribute. As used herein, a unified dimensional attribute is a dimensional specification that is derived from a plurality of other dimensional specifications. That is, upon determining dimensional specifications for each of the parts within the part family, at block 130, a unified dimensional attribute for the part family may be derived or determined from the other dimensional specifications. For example, if dimensional specifications for the parts include length, width and thickness, then these may be used to calculate a volume for the parts in the parts family, and this volume attribute may become the unified dimensional attribute for the part family. As another example, surface area may be used as the unified dimensional attribute for the part family.

Once the dimensional specifications, including any unified dimensional attributes, are determined, at block 140, a correlation analysis is performed between each of the dimensional specifications and the cost data for the parts within the parts family. Specifically, for each of the parts within the parts family, a correlation analysis is performed to determine if a correlation exists between any of the dimensional specifications, including any unified dimensional attributes, and the cost data. According to embodiments, for example, the correlation analysis may be used to determine if the degree of correlation between the dimensional specifications and cost data exceeds a predetermined threshold degree of correlation.

As used herein, the correlation analysis represents a statistical analysis of dependence, whether causal or not, between two variables, e.g., dimension specifications and cost data for the part family. As will be appreciated, the correlation analysis may indicate a predictive relationship between two variables, which, as discussed below, then can be exploited via a predictive model. The correlation analysis may determine that two variables are dependent if they do not satisfy a mathematical property of probabilistic independence. Correlation, as used herein, may refer to any of several specific types of relationship between mean values of the variables analyzed. As will be appreciated, there are several correlation coefficients, often denoted ρ or *r*, which measure the degree of correlation. As an example, the Pearson correlation coefficient is one that is sensitive to a linear relationship between two variables. Exemplary embodiments of the present disclosure may use any type of conventional statistical analysis and related correlation coefficients as part of the correlation analysis of block 140.

While discussion herein primarily involves analyzing the correlation between dimensional specifications and cost data, it should be appreciated that other distinguishing features of the parts within the part family also may be collected and analyzed for correlation with cost data. These other features may include any characteristic by which parts within the part family may be distinguished, including material, shape, number of fittings, etc. As will be seen, quantity of the parts purchased in each purchase order is another variable that may be correlated with cost. Accordingly, any of the processes described herein related to dimensional specifications also may be applied in similar ways to other part features.

If a sufficient degree of correlation is found in the previous block between the dimensional specifications and/or other part feature and the cost data, at block 150, a predictive model is developed. The development of the predictive model may include selecting an appropriate type of model and fitting the selected model to the data. According to exemplary embodiments, the predictive model may be selected from a group of models that includes linear regression models, multivariate weighted linear regression models, and meta-heuristics differential cost models. According to preferred embodiments, a model selection engine may automatically select the right model for the parts within the part family based on the characteristics of the parts and data. For example, apart from the dimensional specifications and the unified dimensional attribute, other characteristics for selecting the predictive model that best fits the data may include material type, number of specific attributes, such as fittings, a shape or form factor, quantity of parts purchased, and/or number of vendors.

Once the predictive model is developed, at block 160, the predictive model is used to predict or calculate a target price for a particular part. As used herein, the target price represents an optimal or fair market price for the buyer for the selected part i.e., a price that would be expected given available evidence of market conditions and prior purchases. As discussed more below, in certain instances, it may be necessary to receive an input for the value of the dimensional specification for the selected part for the calculation of the target price. In such cases, the predictive model will calculate the target price based the inputted value, which may be provided by a user or operator.

At block 170, the method may include a step wherein a bid or purchase order for the selected part is automatically generated. The generated purchase order may include a proposed price that is based on the calculated target price. The generated purchase order then may be sent automatically to one or more predetermined vendors as a proposal for the purchase of the selected part therefrom. Alternatively, the generated purchase order may be first sent to a user or operator for approval thereby before the purchase order is sent to any outside vendor. The purchase order may be communicated to the operator via an electronic communication, such as email, and, if the necessary approval is received from the operator, the purchase order then may be communicated electronically to the vendors in much the same way.

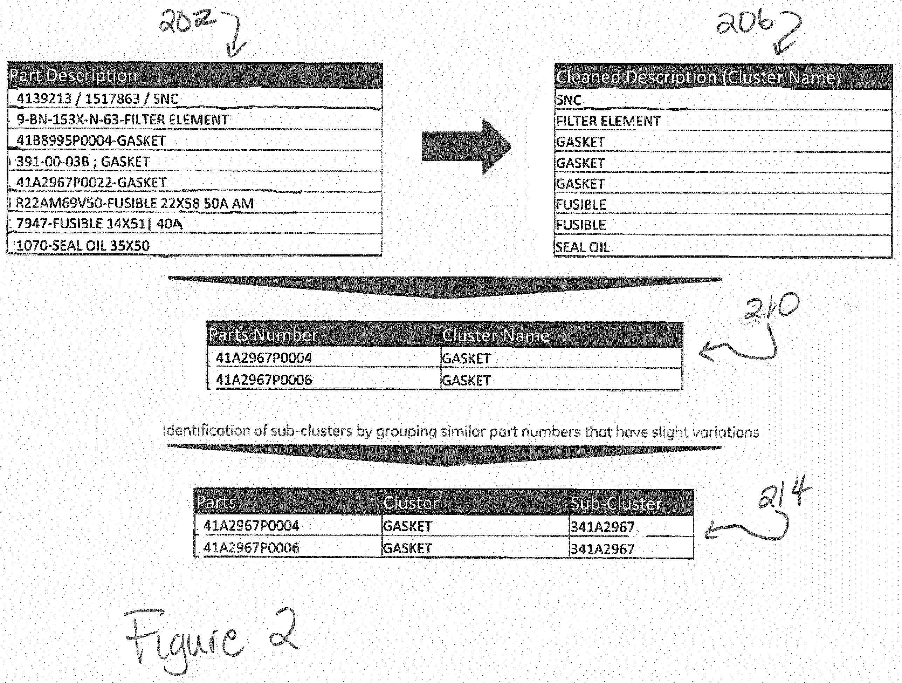

Figure 2 is a flow diagram illustrating an exemplary embodiment by which a part family is derived via a grouping or clustering process. As stated, such clustering may be based on a common characteristic shared by the parts. The common characteristic may be based on the part name, description, number, and/or drawing. As shown in the case of Figure 2, a part description 202 includes raw part descriptions of many different parts. As part of the clustering process, the descriptions contained within the part description 202 may first be "cleaned" to produce what will be referred to herein as a cleaned description listing 206. For example, this cleaning may be done via recognized or commonly occurring words being selected from the raw part descriptions within the parts description 202 for carry over into the cleaned description listing 206. Parts within the cleaned description listing 206 that have those common terms in common then may be grouped within a cluster 210, which is identified via a cluster name. As shown, sub-clusters 214 may be identified within a cluster by grouping similar part numbers that have slight variation, such as slightly varying parts numbers. In this way, a part family may be formed via a grouping or clustering of parts from a larger pool of candidate parts. As will be appreciated, the clustering is based on one or more common characteristic that differentiates the part family from the larger pool of candidate parts.

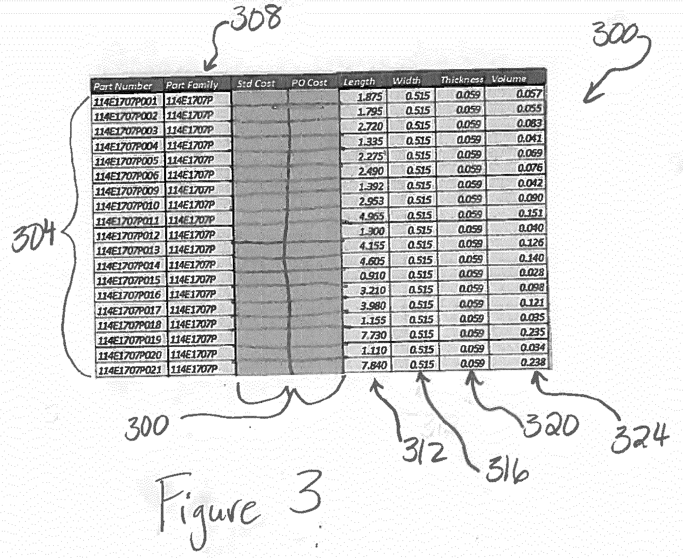

Figure 3 is an example spreadsheet 300 that lists multiple parts 304 within an exemplary part family 308. For each of the parts within the part family, the spreadsheet 300 includes dimensional specifications. As shown, the dimensional specifications for each of the parts in the spreadsheet 300 include length values 312, width values 316, and thickness values 320. Calculated from these values, the spread sheet 300 includes a volume value 324 for each of the parts, which may be serve as a unified dimensional attribute for the part family. The spread sheet 300 may further include columns for cost data 330 into which the type of cost data described herein, e.g., standard or purchase order costs, may be input for each of the parts within the family once it is determined. Once the spreadsheet 300 has been fully populated, the correlation analysis may be initiated between the cost data and any of the dimensional specifications, including the unified dimensional attribute, as already discussed.

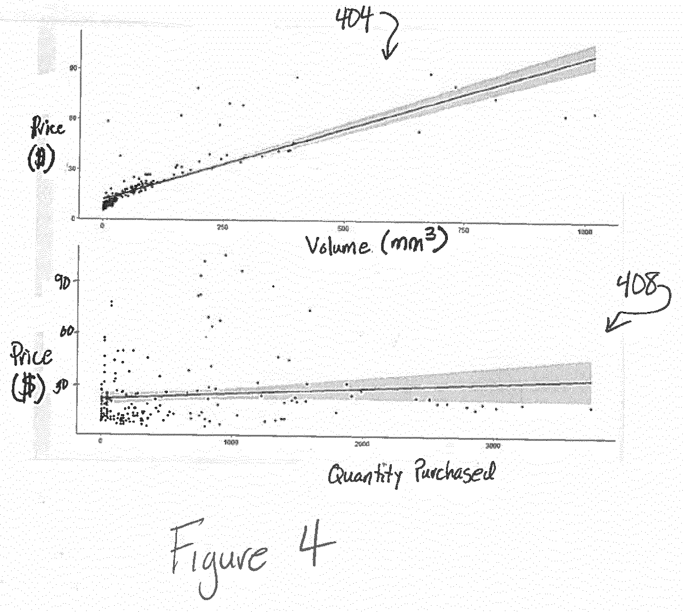

Figure 4 provides example linear regression plots 404, 408 for a part family in accordance with embodiments of the present disclosure. In the upper plot 404, a linear correlation has been derived between a unified dimensional attribute, e.g., volume, and the cost data, e.g., purchase order price, for the part family. As will be appreciated, from the upper plot 404, a predictive model has been derived by which a target price, which may take the form of a specific price or a range of prices, may be calculated for a selected part within the part family using the volume value for the selected part. As will be appreciated, embodiments of the present disclosure may also be used to calculate a target price for a new part that lacks cost data because it has never been procured before. As long as the new part has the common part characteristics that defines the part family-i.e., as long at the new part belongs within the part family for which the predictive model was constructed-the predictive model still may be used as a guide for determining an appropriate purchase or target price.

The lower plot 408 of Figure 4 represents a plot of a second, alternative variable, which is "purchase quantity", in relation to cost data, which is purchase order price. As indicated, a linear correlation has been shown to exist between purchase quantity and the cost data for the part family. Thus, from the lower plot 408, a predictive model has been derived by which a target price may be calculated for a particular part that falls within the part family based on the number of the particular part being purchased.

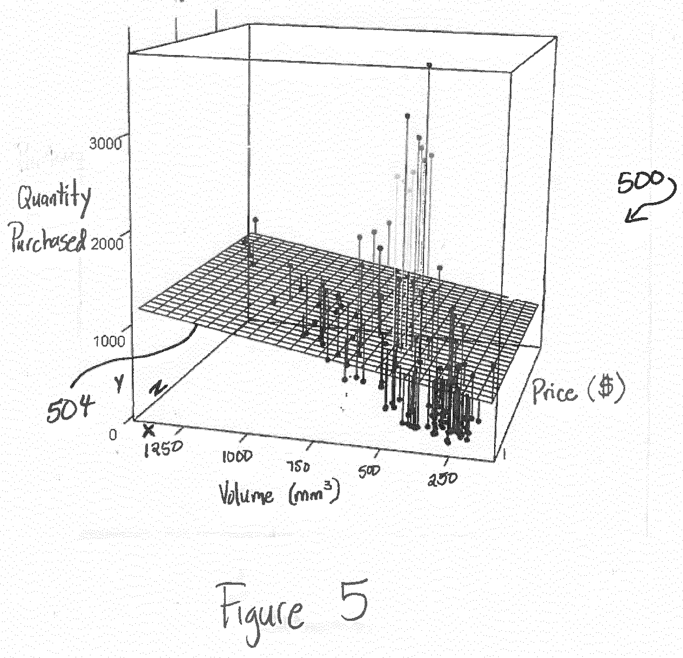

Figure 5 shows an example plane regression model 500 in accordance with the present disclosure. In this example, a plane regression model has been derived between two characteristics of the part family that correlate with the cost data of the part family. Thus, to continue the example begun in Figure 4, the plane 504 may reflect a correlation between: data of a first characteristic, for example, a unified dimensional attribute such as volume (as shown on the X-axis); data of a second characteristic, for example, purchase quantity (as shown on the Y-axis); and a third characteristic, which may be the cost data for the part family, such as purchase order prices (as shown on the Z-axis). As will be appreciated, in this way a plane regression may be completed toward the development of a predictive model that calculates a target price for a selected part within the part family using a plurality of characteristics, which in this exemplary case is volume and purchase quantity.

One advantage of the predictive models of the present disclosure is that they may be used to efficiently identify past procurement transactions or purchases within a given part family that most exceed the target prices calculated for that part family. As will be appreciate, these "outlier" transactions are significant because they likely represent opportunities for the achieving cost savings going forward. Thus, for example, those points that are furthest above the line and plane in Figures 4 and 5, respectively, by the greatest extent are efficiently identified by a user or operator as having a high potential for realizing savings when the next procurement cycle for those parts occurs again. In this way, procurement personnel may prioritize their time based on these findings so that more attention is devoted to parts where likelihood of negotiating lower prices is higher.

As will be further appreciated, the methods and systems of the present disclosure may be used to achieve several other types of benefits. For example, using the systems and methods of the present disclosure, procurement teams will be able to initiate the procurement process for many parts knowing a target price that is supported by empirical evidence based on the fundamental attributes of those parts, e.g., dimensional specifications, prior purchase order cost data, quantity, and other part features. Additionally, methods and systems of the present disclosure may be used to provide an analytical framework that guides procurement teams throughout the process, including facilitating and speeding negotiations with vendors. As stated, embodiments of the present disclosure may be used to identify particular parts for prioritization due to the potential for realizing savings. In addition to this, embodiments of the present disclosure may be used to automate certain aspects of the procurement process, further increasing efficiency. Such benefits should directly result in several types of measurable savings, including savings related to achieving lower prices in future procurement negotiations, savings related to procurement teams operating with greater automation and increased efficiency, as well as savings associated with the avoidance backlogs and the delays and costs that such backlogs typically accrue.

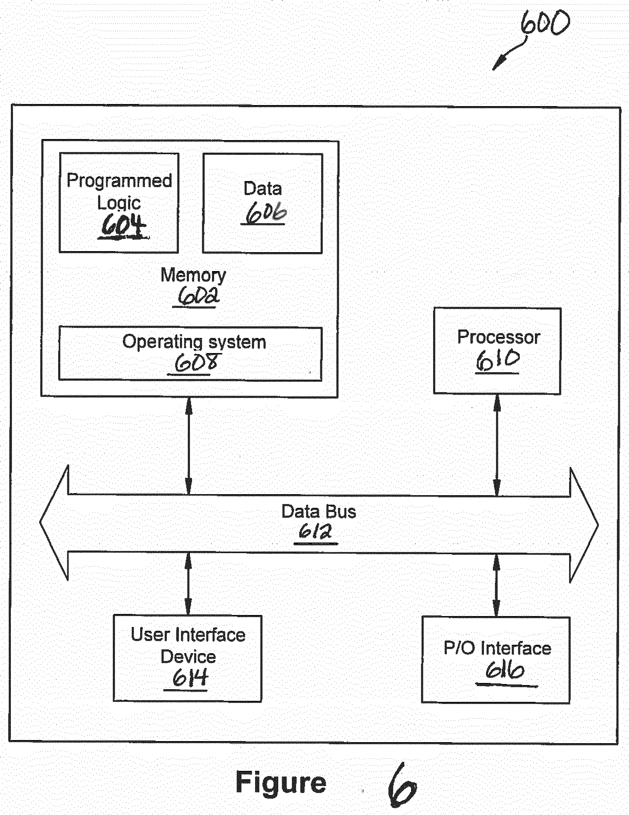

Figure 6 depicts a schematic diagram illustrating an exemplary computer system 600, which may be used for any of the computers or computing resources and/or to perform any of the methods, or portions thereof, discussed above. Computer system 600 may include a memory 602 that stores computer programs or programmed logic 604 (e.g., software) and data 606. Memory 602 also may include an operating system 608. A processor 610 may utilize operating system 608 to execute programmed logic 604, and in doing so, may also utilize data 606. A data bus 612 may provide communication between memory 602 and processor 610. Users may interface with computer system 600 via at least one user interface device 614, such as a keyboard, mouse, touchscreen, gesture control device, wearable computer, control panel, or any other device capable of communicating data to and from computer system 600. Computer system 600 may be in communication with equipment and associated devices online, including sensors or data recorded from such sensors, while operating, as well as in communication with the equipment and its associated devices offline while not operating, via an input/output (I/O) interface 616. More specifically, computer system 600 may carry out the execution of model-based instructions for, but not limited to, providing command signals to certain devices or equipment, as provided herein. Computer system 600 and programmed logic 604 implemented thereby may include software, hardware, firmware, or any combination thereof. It should also be appreciated that multiple controllers or processors may be used in computer system 600, whereby different features described herein may be executed on one or more different controllers or processors.

Accordingly, computer system 600 may be used to implement embodiments of the present disclosure or components or aspects of those embodiments. According to example embodiments, the included figures may include block diagrams of systems, methods, apparatuses, and computer program products. It should be understood that at least some of the blocks of such block diagrams, and combinations of blocks in the block diagrams may be implemented, at least partially, by computer program instructions or code, which may be loaded onto a general purpose computer, such as computer system 600, special purpose computer, special purpose hardware-based computer, or other programmable data processing apparatus to produce a machine, such that the instructions, which execute on the computer or other programmable data processing apparatus, create means for implementing the functionality of at least some of the blocks of the block diagrams, or combinations of blocks in the block diagrams discussed. The computer program instructions mentioned herein may also be stored in a computer-readable memory that can direct a computer or other programmable data processing apparatus to function in a particular manner, such that the instructions stored in the computer-readable memory produce an article of manufacture including instruction for implementing the function specified in the block or blocks. The computer program instructions may also be loaded onto a computer or other programmable data processing apparatus to cause a series of operational steps to be performed on the computer or other programmable apparatus to produce a computer implemented process, such that the instructions that execute on the computer or other programmable apparatus provide steps for implementing the functions specified in the block or blocks. One or more components of the systems and one or more elements of the methods described herein may be implemented through an application program running on an operating system of a computer. They also may be practiced with other computer system configurations, including hand-held devices, multiprocessor systems, microprocessor based or programmable consumer electronics, mini-computers, mainframe computers, and so forth.

As used herein, it is understood that computer program or programmed logic 604 means any collection of code or instructions, in any language or notation, that cause a computing device having an information processing capability to perform a particular action either directly or after any combination of the following: (a) conversion to another language, code or notation; (b) reproduction in a different material form; and/or (c) decompression. Additionally, the computer program may include object code, source code, and/or executable code, and may form part of a computer program product when on computer readable medium. It is understood that the term "computer readable medium" may comprise one or more of any type of tangible medium of expression, now known or later developed, from which a copy of the computer program or programmed logic 604 may be perceived, reproduced, or otherwise communicated by a computing device. As will be appreciated, when the computer executes the computer program or programmed logic 604, it becomes an apparatus for practicing the invention, and on a general-purpose microprocessor, specific logic circuits are created by configuration of the microprocessor with computer code segments. For example, a technical effect of the executable instructions may be to implement a predetermined predictive model, use that model to predict a target price for a selected part within a part family, automatically generate a purchase order relating to that target price, as well as others described herein. To this extent, the computer program or programmed logic 604 executed by the computer may be embodied as any combination of system software and/or application software. Further, the computer program or programmed logic 604 may be implemented using a set of modules. As will be appreciated, when the computer system executing the computer program or programmed logic 604 includes multiple computing devices, such as previously described, each computing device may have only a portion of computer program or programmed logic 604 fixed thereon.

As one of ordinary skill in the art will appreciate, the many varying features and configurations described above in relation to the several exemplary embodiments may be further selectively applied to form the other possible embodiments of the present invention. For the sake of brevity and taking into account the abilities of one of ordinary skill in the art, each of the possible iterations is not provided or discussed in detail, though all combinations and possible embodiments embraced by the several claims below or otherwise are intended to be part of the instant application. In addition, from the above description of several exemplary embodiments of the invention, those skilled in the art will perceive improvements, changes and modifications. Such improvements, changes and modifications within the skill of the art are also intended to be covered by the appended claims. Further, it should be apparent that the foregoing relates only to the described embodiments of the present application and that numerous changes and modifications may be made herein without departing from the spirit and scope of the application as defined by the following claims and the equivalents thereof.

## Claims

1. A computer-implemented method for enabling a user to operate a predictive model for calculating a target price relating to a purchase of a selected part, the method comprising the steps of:
determining a part family (110), wherein the part family comprises a plurality of parts having a common characteristic;
for each of the plurality of parts within the part family, obtaining cost data (120);
for each of the plurality of parts within the part family, obtaining feature data (125);
performing a correlation analysis (140) between the feature data and the cost data for the parts within the part family;
developing the predictive model (150) from a result of the correlation analysis; and
calculating the target price (160) for the selected part using the predictive model.

2. A computer-implemented method according to claim 1, wherein the step (150) of developing the predictive model comprises fitting a model to a correlation between the feature data and the cost data for the parts within the part family.

3. A computer-implemented method according to claim 1 or claim 2, wherein the feature data comprises data describing a material from which each of the parts of the part family are made.

4. A computer-implemented method according to any preceding claim, wherein the feature data comprises dimensional specifications; and
wherein the step (140) of performing the correlation analysis comprises correlating at least one of the dimensional specifications to the cost data.

5. A computer-implemented method according to claim 4, wherein the step (110) of determining the part family comprises clustering the plurality of parts from a larger pool of candidate parts based on the common characteristic; and
wherein the cost data comprises purchase order prices from previous purchase orders for each of the parts of the part family.

6. A computer-implemented method according to claim 5, wherein the plurality of parts within the part family includes the selected part;
wherein the common characteristic comprises at least one of: a part name and a part number; and wherein the step of obtaining dimensional specifications comprises extracting data from an engineering specification document for each of the parts of the part family.

7. A computer-implemented method according to any of claims 4 to 6, wherein the dimensional specifications comprises a unified dimensional attribute; and
wherein the at least one of the dimensional specifications included within the correlation analysis comprises the unified dimensional attribute.

8. A computer-implemented method according to claim 7, wherein the unified dimensional attribute is derived from at least two of the dimensional specifications; and
wherein the unified dimensional attribute comprises a surface area for each of the parts in the part family.

9. A computer-implemented method according to claim 7, wherein the dimensional specifications comprises a length, a width, and a thickness for each of the parts in the part family; and
wherein the unified dimensional attribute comprises a volume for each of the parts in the part family derived from the length, width, and thickness.

10. A computer-implemented method according to any of claims 4 to 9, further comprising the step of receiving an input for a value of the at least one of the dimensional specifications for the selected part; wherein the predictive model calculates the target price based on the inputted value of the at least one of the dimensional specifications.

11. A computer-implemented method according to any of claims 4 to 10, wherein the predictive model comprises a linear regression model or a multivariate weighted linear regression model; and
wherein the step of performing the correlation analysis between the at least one of the dimensional specifications and the cost data comprises determining if a degree of correlation between the at least one of the dimensional specifications and the cost data exceeds a threshold degree of correlation.

12. A computer-implemented method according to any of claims 4 to 11, further comprising the steps of:
receiving at least one command from the user for initiating the calculating of the target price for the selected part; and
automatically generating without further human intervention a graphical output on a computer screen of the user that communicates the target price.

13. A computer-implemented method according to any of claims 4 to 11, further comprising the steps of:
receiving at least one command from the user for initiating the calculating of the target price for the selected part; and
automatically generating without further human intervention a purchase order for the purchase of the selected part, wherein the purchase order comprises a price based upon the calculated target price; and
optionally automatically communicating without further human intervention the generated purchase order to at least one vendor via a form of electronic communication.

14. A computer-implemented method according to claim 1 or claim 2, wherein the feature data comprises data of a first characteristic, e.g., a dimensional specification, and data of a second characteristic, e.g., a purchase quantity, for each of the parts within the parts family;
wherein step of performing the correlation analysis between the feature data and the cost data for the parts within the part family comprises:
a first correlation analysis between the data of the first characteristic and the cost data for the parts within the parts family; and
a second correlation analysis between the data of the second characteristic and the cost data for the parts within the parts family;
wherein the predictive model comprises a plane regression model.

15. A system for enabling a user to operate a predictive model for calculating a target price relating to a purchase of a selected part, the system comprising:
one or more hardware processor (610); and
a machine-readable storage medium (602) on which is stored instructions that cause the one or more hardware processors (610) to execute a process, wherein the process includes the steps of:
determining a part family (110), wherein the part family comprises a plurality of parts having a common characteristic;
for each of the plurality of parts within the part family, obtaining cost data (120);
for each of the plurality of parts within the part family, obtaining feature data (125);
performing a correlation analysis (140) between the feature data and the cost data for the parts within the part family;
developing the predictive model (150) from a result of the correlation analysis; and
calculating the target price (160) for the selected part using the predictive model.
